# EUROPÄISCHE PATENTSCHRIFT

(11) **EP 0 718 223 B1**
(45) Veröffentlichungstag und Bekanntmachung des Hinweises auf die Patenterteilung: **16.09.1998**
(21) Anmeldenummer: 95115591.0
(22) Anmeldetag: 04.10.1995
(51) Int. Cl.: B65G 47/91

(54) **Umsetzvorrichtung für Güter, insbesondere Dosen**
Transfer device for goods, especially for cans
Dispositif de transfert pour marchandises, notamment pour boîtes

(30) Priorität: 19.12.1994 DE 4445108
(43) Veröffentlichungstag der Anmeldung: 26.06.1996
(73) Patentinhaber: LTG LUFTTECHNISCHE GMBH, 70435 Stuttgart (DE)
(72) Erfinder:
(74) Vertreter: Grosse, Rainer, Dipl.-Ing.

(56) Entgegenhaltungen:
- EP-A- 0 563 461

## Beschreibung

Die Erfindung betrifft eine Umsetzvorrichtung für mit einer ersten Transporteinrichtung angelieferte Güter, insbesonder Aluminium-Dosen, die gruppenweise als in Transportrichtung der ersten Transporteinrichtung weisende Reihe von der ersten Transporteinrichtung auf eine zweite Transporteinrichtung überführt werden, wobei das Abstellen der Güter auf die zweite Transporteinrichtung derart erfolgt, daß sich die Reihe guer zu dessen Transportrichtung erstreckt, mit einer die jeweilige Gruppe der Güter bei der Umsetzbewegung haltenden Aufnahmeeinrichtung, die mittels mindestens eines Gelenkgetriebes entlang einer Bewegungsbahn geführt wird, wobei das Gelenkgetriebe einen ersten Arm aufweist, der an einem Ende schwenkbar (erste Achse) mit der Aufnahmeeinrichtung und an seinem anderen Ende schwenkbeweglich (zweite Achse) mit einer umlaufenden Antriebskurbel verbunden ist, sowie mit einem zweiten Arm, der schwenkbar (dritte Achse) an dem ersten Arm angelenkt und um eine Fixachse (vierte Achse) schwenkbeweglich gelagert ist.

Bei der ersten Transporteinrichtung kann es sich beispielsweise um ein erstes Trum handeln, auf dem die Güter in Reihe (insbesondere einreihig oder auch zweireihig beziehungsweise mehrreihig nebeneinander) angeordnet sind. Die Umsetzvorrichtung nimmt von dieser Reihe beziehungsweise diesen Reihen jeweils einen Abschnitt, also eine Gruppe, der Güter auf und überführt sie zur zweiten Transporteinrichtung, wo die Güter abgestellt werden. Das Abstellen erfolgt mit einer derartigen Ausrichtung der Reihe beziehungsweise der Reihen, daß die Längsrichtung der Reihe beziehungsweise Reihen quer zur Transportrichtung der zweiten Transporteinrichtung verläuft beziehungsweise verlaufen. Wenn es sich bei der zweiten Transporteinrichtung beispielsweise ebenfalls um ein Trum handelt, so verläuft die Reihe der Güter quer, insbesondere senkrecht zur Längserstreckung des Trums. Bei den Gütern kann es sich beispielsweise um Dosen, inbesondere Getränkedosen, handeln, die nacheinander in einer der ersten Transporteinrichtung vorgelagerten Druckmaschine außen bedruckt werden und dann mittels der Transporteinrichtung zur Umsetzvorrichtung geführt werden. Die Umsetzvorrichtung ordnet die gruppenweise aufgenommenen Dosen derart um, daß sie auf der zweiten Transporteinrichtung in jeweils zueinander parallel verlaufenden Reihen abgesetzt werden, wobei die Längserstreckung dieser Reihen quer zur Transportrichtung der zweiten Transporteinrichtung verläuft. Auf diese Art und Weise wird die zweite Transporteinrichtung sehr kompakt mit Gütern bestückt, die -im Falle der erwähnten Dosenbeispielsweise einer Trocknungseinrichtung (Durchlauftrocknungseinrichtung) zugeführt werden. Die Umsetzvorrichtung ist derart ausgebildet, daß sie mittels ihrer Aufnahmeeinrichtung Güter von der ersten Transporteinrichtung aufnimmt, wobei sie sich während des Aufnahmevorgangs mit den Gütern synchron mitbewegt, so daß beim Aufnahmevorgang keine oder nur eine geringe Relativbewegung zwischen den Gütern und der Aufnahmeeinrichtung besteht. Dies garantiert eine positionsgenaue und damit sichere Übernahme auch bei hohen Geschwindigkeiten. Gleiches gilt für den Absetzvorgang auf die zweite Transporteinrichtung. Auch hier bewegt sich die Aufnahmeeinrichtung in einem festgelegten Bewegungsbahnbereich synchron oder fast synchron mit dem Transportmittel der zweiten Transporteinrichtung, so daß ein positionsgenaues Absetzen möglich ist, ohne daß die Güter aneinanderstoßen oder umfallen und so weiter. Da der Umsetzvorgang aufgrund der hohen Güteranlieferzahl sehr schnell durchgeführt werden muß, ist es erforderlich, die Güter wegen der auftretenden Beschleunigungskräfte beim Umsetzvorgang sehr fest an der Aufnahmeeinrichtung zu halten. Hierzu wird vorzugsweise eine Vakuumhalterung verwendet, das heißt, die Güter werden von oben her angesaugt und dann überführt. Hierzu ist es nicht erforderlich, daß die Aufnahmeeinrichtung ihre Höhenposition verändert, sondern sie kann sich in einer Ebene bewegen. Wenn sie sich bei der Aufnahme mit geringem Abstand oberhalb der oberen Dosenränder befindet, so reicht dies für einen Ansaugvorgang aus. Entsprechendes gilt beim Absetzen, wobei der Absetzvorgang dadurch herbeigeführt wird, daß das Vakuum abgeschaltet und hierdurch die Güter freigegeben und auf der zweiten Transporteinrichtung abgestellt werden.

Eine Umsetzvorrichtung der eingangs beschriebenen Art geht aus der europäischen Patentanmeldung 0 563 461 hervor. Diese bekannte Umsetzvorrichtung hat den Nachteil, daß auf das Maschinengestell sehr hohe Beschleunigungskräfte während des Betriebs wirken, so daß ein unruhiger, nicht erschütterungsfreier Lauf vorliegt, der einerseits eine hohe Materialbeanspruchung mit sich bringt und andererseits ein positionsgenaues Aufnehmen und Absetzen der Güter erschwert. Überdies ist das mittels Vakuum erfolgende Aufnehmen und Absetzen der Güter bei der bekannten Einrichtung nicht optimal.

Der Erfindung liegt daher die Aufgabe zugrunde, die vorstehend genannten Nachteile für einen optimalen Betrieb der Umsetzvorrichtung zu vermeiden.

Diese Aufgabe wird erfindungsgemäß gelöst durch ein dem ersten Arm zugeordnetes (erstes) Ausgleichsgewicht. Aufgrund dieser Maßnahme wird ein ruhiger Lauf der beweglichen Teile der Umsetzvorrichtung erzielt. Die Bewegung der Umsetzvorrichtung ist gekennzeichnet durch hohe Beschleunigungs- und Abbremsvorgänge, da beim Aufnahmevorgang die Aufnahmeeinrichtung synchron mit der ersten Transporteinrichtung mitbewegt werden muß, dann die Überführungsbewegung zur zweiten Transporteinrichtung erfolgt und dort wiederum eine Abstimmung auf die Geschwindigkeit der zweiten Transporteinrichtung erfolgen muß. Anschließend ist dann die Aufnahmeeinrichtung wieder zur ersten Transporteinrichtung zurückzuführen, wo der Vorgang sich entsprechend wiederholt. Vorzugsweise ist vorgesehen, daß sich die Transportrichtung der ersten Transporteinrichtung quer, inbesondere senkrecht, zur Transportrichtung der zweiten Transporteinrichtung erstreckt. Die Abstellebenen der beiden Transporteinrichtungen sind in gleicher Höhe angeordnet. Dadurch, daß dem ersten Arm ein Ausgleichsgewicht zugeordnet ist, werden die auf die Arme und sonstige Teile der Umsetzvorrichtung wirkenden Kräfte aufgrund der dynamischen Bewegungen reduziert beziehungsweise kompensiert, wodurch es möglich ist, das vibrationsfreie Maschinengestell entsprechend schwächer zu dimensionieren, also Material einzusparen. Überdies ist die Positionsgenauigkeit beim Aufnehmen und Absetzen der Güter sowie die Haltefähigkeit und Positonsbeibehaltung der Güter an der Aufnahmeeinrichtung aufgrund der Vibrationsfreiheit optimal gewährleistet. Die Maschinenbauteile und die Abstützung des Gestells zum Boden können aufgrund dieses vibrationsfreien oder vibrationsgeminderten Laufes entsprechend schwächer dimensioniert werden, so daß Kosten eingespart werden und die Betriebssicherheit erheblich erhöht ist.

Nach einer Weiterbildung der Erfindung ist vorgesehen, daß dem zweiten Arm ebenfalls ein (zweites) Ausgleichsgewicht zugeordnet ist. Hierdurch werden die zuvor beschriebenen Umstände noch weiter verbessert. Die Besonderheit ist, daß erkannt wurde, daß die Zuordnung eines Ausgleichsgewichts zum ersten und gegebenenfalls auch zum zweiten Arm die positiven Wirkungen herbeiführt, wobei aus der riesengroßen Anzahl der Möglichkeiten der Anordnung eines oder mehrerer Ausgleichsgewichte gerade diese speziellen Stellen herausgesucht worden sind.

Nach einer Weiterbildung der Erfindung ist vorgesehen, daß das erste Ausgleichsgewicht im Bereich der zweiten Achse am ersten Arm angeordnet ist.

Insbesondere ist es vorteilhaft, wenn das erste Ausgleichsgewicht in Form eines Auslegers des ersten Arms ausgebildet ist, wobei der Ausleger quer zur Längserstreckung des ersten Arms verläuft. Die Formulierung "Ausleger" ist im Hinblick auf die Gewichtsverteilung des Arms zu verstehen, das heißt, es ist nicht unbedingt erforderlich, daß körperlich ein Ausleger ausgebildet wird, wenn dies auch beim Ausführungsbeispiel in den Figuren so angegeben ist, sondern es kommt darauf an, daß seitlich der Längserstreckung des ersten Armes eine entsprechende Masse angeordnet wird, so daß es zur Ausbildung dieses Ausgleichsgewichts kommt. Die tatsächliche Formausbildung des ersten Armes spielt dabei somit keine Rolle.

Insbesondere ist vorgesehen, daß der Ausleger einen Seitenausleger des ersten Arms bildet.

Nach einer Weiterbildung der Erfindung ist vorgesehen, daß der erste Arm zusammen mit dem Ausleger einen Winkelarm bildet, wobei im Eckbereich des Winkels die zweite Achse angeordnet ist.

Um eine Optimierung herbeiführen zu können, kann inbesondere vorgesehen sein, daß die Masse des ersten Ausgleichsgewichts durch Hinzunahme beziehungsweise Abnahme von Gewichtskörpern einstellbar ist. Dies gilt auch für das zweite Ausgleichsgewicht. Gleichfalls kann beim ersten und/oder zweiten Ausgleichsgewicht vorgesehen sein, daß mittels Verstellmittel die Position des Ausgleichsgewichts beziehungsweise der Ausgleichsgewichte verstellt werden kann, derart, daß ein optimales Ergebnis erzielt wird.

Vorzugsweise ist der zweite Arm über seine Fixachse hinaus verlängert und weist dort das zweite Ausgleichsgewicht auf. Dies kann symmetrisch zur Längsmittelachse des zweiten Arms angeordnet sein.

Die Aufnahmeeinrichtung ist vorzugsweise als Vakuum-Ansaugeinrichtung für die Güter ausgebildet. Dies bedeutet, daß die Güter mittels Unterdruck angesaugt und bei der Überführungsbewegung gehalten werden und -sobald die zweite Transporteinrichtung erreicht ist- durch Abschalten des Vakuums freigegeben und abgesetzt werden. Die Steuerung des Unterdrucks wird von einer Unterdruck-Steuereinrichtung vorgenommen, die eine in einer Vakuumleitung angeordnete Schwenkklappe aufweist, welche synchron mit der Bewegung der Aufnahmeeinrichtung gesteuert wird. Hierdurch wird die Vakuumleitung verschlossen beziehungsweise freigegeben, je nach dem, ob die Güter gehalten werden sollen (Haltebetrieb) oder ob sie freigegeben werden sollen (Abstellbetrieb). Die Schwenkklappe befindet sich vorzugsweise in einem erweiterten Querschnittsbereich der Vakuumleitung. Mit der Schwenkklappe ist vorzugsweise eine Bypass-Luftklappe gekoppelt, die im Haltebetrieb eine Belüftungsöffnung verschließt und im Abstellbetrieb die Belüftungsöffnung freigibt. Hierdurch ist sichergestellt, daß sich beim Übergang von dem Haltebetrieb in den Abstellbetrieb das Vakuum sehr schnell abbaut, so daß die Güter möglichst zeitgenau im Millisekundenbereich alle gleichzeitig freigegeben und ordnungsgemäß ausgerichtet abgestellt werden.

Weitere bevorzugte Ausbildungen der Erfindung sind in den Unteransprüchen gekennzeichnet.

Die Erfindung wird anhand eines Ausführungsbeispiels näher erläutert und zwar zeigt:
- Figur 1: eine schematische Ansicht auf eine erste und eine zweite Transporteinrichtung, auf denen Güter angeordnet sind,
- Figur 2: eine der Figur 1 entsprechende Variante,
- Figur 3: eine schematische, perspektivische Ansicht der Ausgestaltung der Figuren 1 beziehungsweise 2,
- Figur 4: eine schematische Draufsicht auf eine Umsetzvorrichtung, die zwischen der ersten und der zweiten Transporteinrichtung angeordnet ist,
- Figur 5: eine Seitenansicht der Darstellung der Figur 4,
- Figuren 6 bis 8: verschiedene Stellungsbilder von Maschinenelementen der Umsetzvorrichtung,
- Figuren 9 und 10: eine Unterdruck-Steuereinrichtung in verschiedenen Arbeitsstellungen und
- Figur 11: ein Phasenverstellgetriebe für die Unterdruck-Steuereinrichtung.

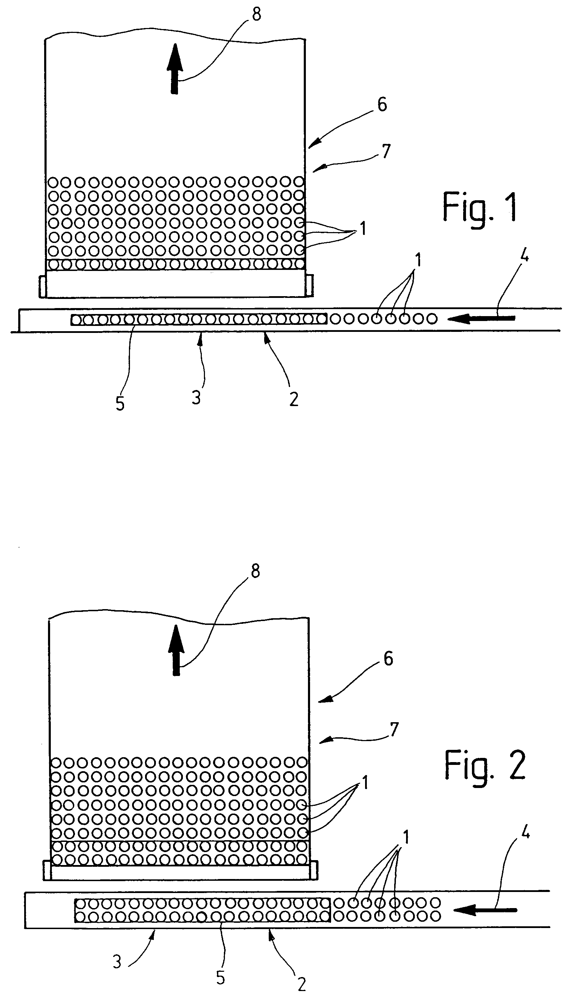

Die Figur 1 zeigt eine Draufsicht auf einen Umsetzbereich von Gütern 1, wobei es sich bei den Gütern 1 um frischlackierte Blechdosen handelt, wie sie beispielsweise aus der Getränkeindustrie bekannt sind. Die Güter 1 werden als Reihe auf einer ersten Transporteinrichtung 2 angeliefert. Die erste Transporteinrichtung 2 ist vorzugsweise als ein erstes Trum 3 ausgebildet. Mithin stehen die Güter 1 als Reihe auf dem Trum und werden in Richtung des Pfeiles 4 transportiert. Die Transportrichtung 4 weist in Längsrichtung der Reihe der Güter 1. Mittels einer in der Figur 1 nicht dargestellten Umsetzvorrichtung wird eine Gruppe 5 der Güter 2 erfaßt und auf eine zweite Transporteinrichtung 6 überführt. Die Gruppe 5 ist durch ein Rechteck gekennzeichnet, in dem sich eine entsprechende Anzahl von Gütern 1 befindet.

Bei der zweiten Transporteinrichtung 6 handelt es sich ebenfalls um ein (zweites) Trum 7, das sich in Richtung des Pfeiles 8 bewegt. Die nicht dargestellte Umsetzvorrichtung überführt die Gruppe 5 derart, daß sich die in ihr reihenförmig angeordneten Güter 1 in einer Reihenausrichtung befinden, die quer, inbesondere senkrecht zur Transportrichtung 8 der zweiten Transporteinrichtung 6 verläuft. Aus der Figur 1 wird daher deutlich, daß im Zuge der Umsetzbewegungen jeweils eine von der ersten Transporteinrichtung 2 überführte und auf die zweite Transporteinrichtung 6 abgesetzte Gruppe zu sich dort ausbildenden Parallelreihen von Gütern 1 führt, wobei die Breite des Trums 6 vorzugsweise der Länge der Gruppe 5 entspricht und der Umsetzvorgang derart schnell und abgestimmt erfolgt, daß stets gerade eine Gruppe 5 von Gütern 1 auf der ersten Transporteinrichtung 2 zur Verfügung steht, wenn der vorherige Absetzvorgang einer Gruppe 5 beendet ist, so daß die erneute Gruppe 5 zur zweiten Transporteinrichtung 6 überführt wird, derart, daß die einzelnen dort abgesetzten Reihen -in Transportrichtung 8 gesehen- eng aneinander, jedoch ohne Berührung der einzelnen Güter 1 liegen. Auf diese Art und Weise kann eine sehr hohe Dichte von Gütern 1 auf der zweiten Transporteinrichtung 6 geschaffen werden.

Die Figur 2 zeigt eine der Figur 1 entsprechende Anordnung, wobei jedoch auf der ersten Transporteinrichtung 2 zwei parallel zueinander verlaufende Reihen von Gütern 1 angeliefert werden und die nicht dargestellte Umsetzvorrichtung derart ausgebildet ist, daß sie innerhalb einer Gruppe 5 stets zwei parallele Reihen von Gütern 1 von der ersten Transporteinrichtung 2 zur zweiten Transporteinrichtung 6 überführt. Nach nicht dargestellten Ausführungsbeispielen ist es auch möglich, drei oder sogar mehr parallele Reihen von Gütern 1 zu überführen.

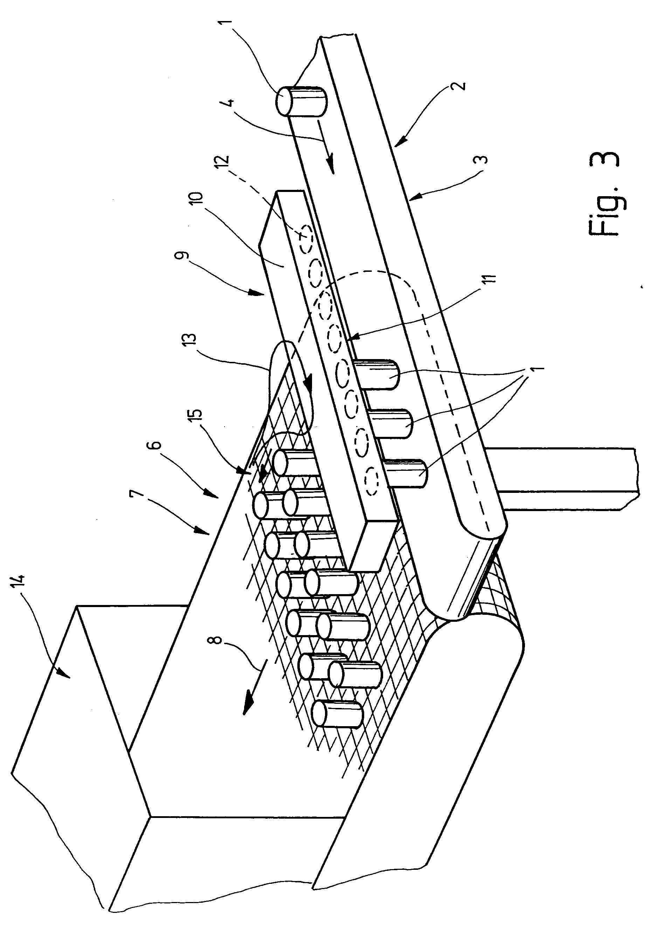

Die Figur 3 verdeutlicht die vorstehenden Ausführungen. In der Figur 3 ist die Umsetzvorrichtung 9 rein schematisch dargestellt. Sie weist eine balkenförmige Aufnahmeeinrichtung 10 auf, die an ihrer den Gütern 1 zugekehrten Unterseite 11 Saugschlitze 12 aufweist, die in Gegenüberlage zu den Gütern 1 der Transporteinrichtung 2 gelangen. Hierbei bewegt sich die Umsetzvorrichtung 9 nahezu synchron zur Bewegung der Güter 1 auf der ersten Transporteinrichtung 2, so daß nahezu keine Relativbewegung vorliegt. In diesem Zustand wird der Unterdruck in der Aufnahmeeinrichtung 10 erzeugt, wodurch die Güter 1 angesaugt und an der Unterseite 11 der Aufnahmeeinrichtung 10 gehalten werden. Im Zuge des weiteren Betriebs durchläuft die Aufnahmeeinrichtung 10 eine Kurvenbahn 13, das heißt, sie bewegt sich in Richtung auf die zweite Transporteinrichtung 6, wobei sie dabei eine Geschwindigkeit annimmt, die der Transportgeschwindigkeit und der Transportrichtung der zweiten Transporteinrichtung 6 entspricht. Hat die Aufnahmeeinrichtung 10 oberhalb der zweiten Transporteinrichtung 6 die entsprechende Absetzposition erreicht, so wird das Vakuum abgeschaltet und die Güter 1 freigegeben, die sich dann entsprechend ihrer reihenförmigen Ausrichtung auf dem Trum 7 absetzen und in Richtung des Pfeils 8 beispielsweise in einen Trocknungstunnel 14 einlaufen. Dem weiteren Verlauf der Kurvenbahn 13 ist entnehmbar, daß nach dem Absetzen die Aufnahmeeinrichtung 10 kurzzeitig einen Stillstand erreicht (Punkt 15) und dann entsprechend beschleunigt zurückgeführt wird, um wiederum Güter 1 von der ersten Transporteinrichtung 2 aufnehmen zu können. Der beschriebene Vorgang wiederholt sich somit zyklisch, wobei sehr hohe Geschwindigkeiten, beispielsweise etwa bis zu 1500 Dosen pro Minute gefahren werden (einreihig gemäß Figur 1). Die Anzahl der Dosen, die pro Minute überführt werden, richtet sich auch nach der Breite der zweiten Transporteinrichtung 6. Aufgrund des sehr ruhigen Laufs der erfindungsgemäßen Umsetzvorrichtung 9, auf den nachstehend noch im Detail eingegangen wird, ist es möglich, gegenüber den bekannten Umsetzvorrichtungen eine größere Anzahl von Dosen pro Zeiteinheit umzusetzen.

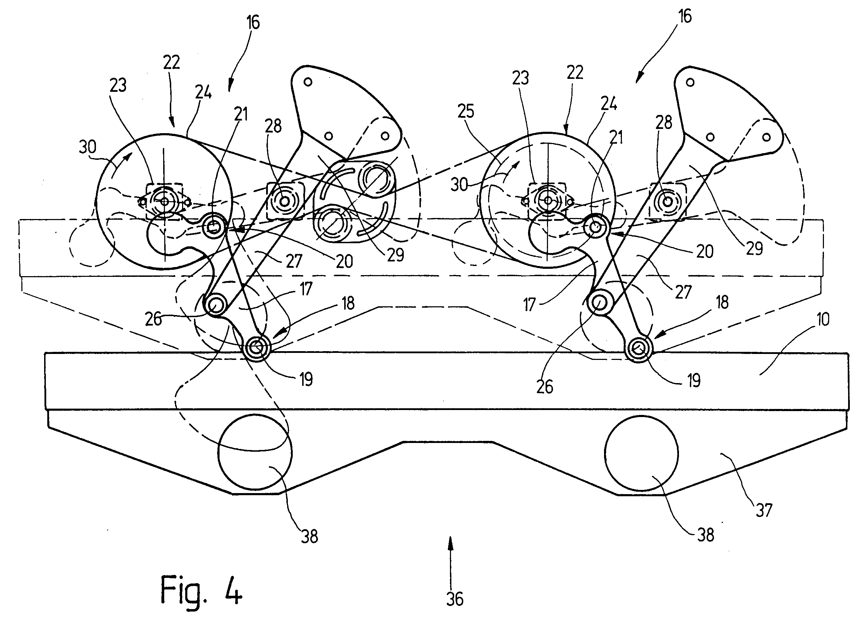

Die Kurvenbahn 13 der Aufnahmeeinrichtung 10 wird mittels eines Gelenkgetriebes 16 herbeigeführt, wie es schematisch aus der Figur 4 hervorgeht. Dort sind zwei identisch aufgebaute Gelenkgetriebe 16 gezeigt, die entlang der Längserstreckung der balkenförmigen Aufnahmeeinrichtung 10 einmal in dem einen und einmal in dem anderen Endbereich dieser Aufnahmeeinrichtung 10 angreifen, wobei die beiden Gelenkgetriebe 16 hinsichtlich ihrer Bewegung synchronisiert und gleich ablaufend ausgebildet sind. Im Nachfolgenden wird daher nur auf die Ausbildung eines Gelenkgetriebes 16 eingegangen. Die Ausführungen gelten in entsprechender Weise für das andere Gelenkgetriebe 16.

Das Gelenkgetriebe 16 weist einen ersten Arm 17 auf, der an einem Ende 18 mittels einer ersten Achse 19 schwenkbeweglich mit der Aufnahmeeinrichtung 10 verbunden ist. Das andere Ende 20 des ersten Arms 17 ist mittels einer zweiten Achse 21 schwenkbeweglich mit einer umlaufenden Antriebskurbel 22 verbunden, die als mittels eines maschinengestellfesten Lagers 23 umlaufendes Rad 24 ausgebildet ist. Der Umlaufkreis der zweiten Achse 21 ist in der Figur 4 mit dem Bezugszeichen 25 gekennzeichnet.

Etwa im mittleren Abschnitt zwischen der ersten Achse 19 und der zweiten Achse 21 ist am ersten Arm 17 eine dritte Achse 26 ausgebildet, mittels der ein zweiter Arm 27 schwenkbeweglich an dem ersten Arm 17 angelenkt ist. Die Draufsicht der Figur 4 zeigt deutlich, daß die dritte Achse 26 rechtsseitig einer gedachten Verbindungslinie zwischen der ersten Achse 19 und der zweiten Achse 21 liegt. Der zweite Arm 27 ist mittels eines maschinengestellfesten Lagers schwenkbeweglich gelagert, das heißt, das Lager bildet eine Fixachse, die nachfolgend als vierte Achse 28 bezeichnet wird. Figur 4 ist zu entnehmen, daß der zweite Arm 27 über die vierte Achse 28 hinaus verlängert ausgebildet ist. Diese Verlängerung ist mit dem Bezugszeichen 29 gekennzeichnet.

Aus dem Vorstehenden wird deutlich, daß bei einer Drehung der Antriebskurbel 22 in Richtung des Pfeiles 30 die Aufnahmeeinrichtung 10 mittels des als Koppel wirkenden ersten Armes 17 eine entsprechende Bewegung durchführen wird, wobei diese Bewegung durch den zweiten Arm 27 zwangsgeführt wird, so daß sich daraus resultierend die Kurvenbahn 13 ausbildet. Zur Verdeutlichung dieser Bewegung sind in der Figur 4 zwei Stellungen des Gelenkgetriebes 16 dargestellt, eine Stellung in durchgezogener Linie und eine weitere Stellung in gestrichelter Linie. Die mit durchgezogener Linie gekennzeichnete Stellung entspricht einer pick-up-Stellung, das heißt, die Aufnahmeeinrichtung 10 übernimmt in dieser Stellung Güter 1 von der ersten Transporteinrichtung 2. Die mit gestrichelter Linie gekennzeichnete Stellung entspricht einer pull-down-Stellung, das heißt, die Güter 1 sind zur zweiten Transporteinrichtung 6 überführt worden und werden in dieser Stellung dort abgesetzt.

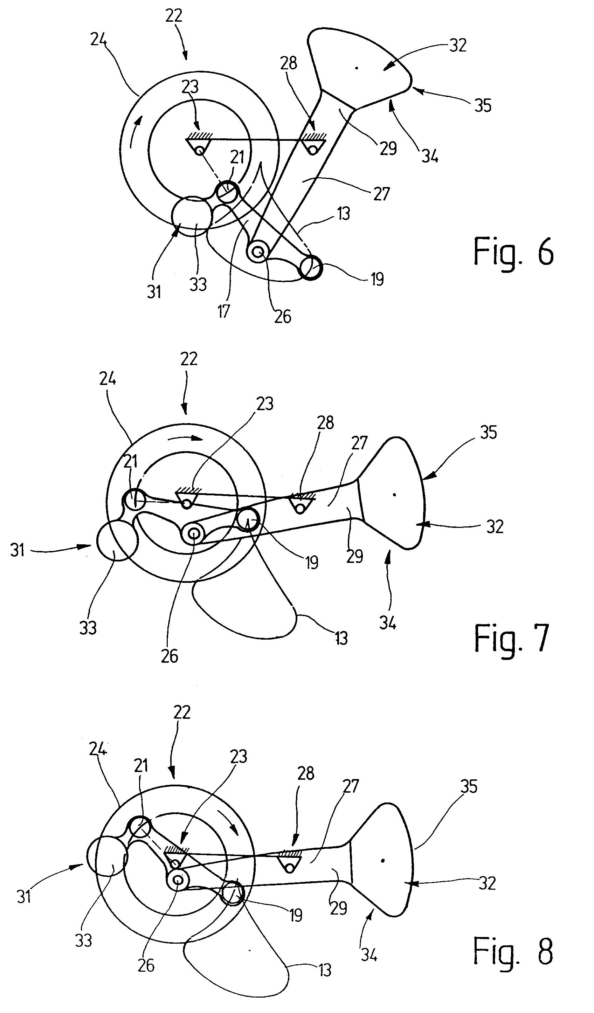

Anhand der Figuren 6 bis 8 sind die verschiedenen Stellungen nochmals verdeutlicht, wobei in die Figuren auch die Kurvenbahn 13 mit eingezeichnet ist, so daß die zuvor beschriebene Umsetzbewegung der Güter 1 hieraus besonders deutlich wird.

Wesentlich für einen ruhigen, vibrationsfreien Lauf der Umsetzvorrichtung 9 ist, daß dem ersten Arm 17 ein erstes Ausgleichsgewicht 31 und optional zusätzlich dem zweiten Arm 27 ein zweites Ausgleichsgewicht 32 zugeordnet ist beziehungsweise sind. Die Figuren zeigen, daß das erste Ausgleichsgewicht 31 im Bereich der zweiten Achse 21 angeordnet ist. Vorzugsweise wird es beim Ausschneiden (Laserschneiden) des ersten Arms 17 zumindest hinsichtlich seiner Trageigenschaft zur Aufnahme weiterer Massen mit dem Arm 17 zusammen einstückig aus einer entsprechenden Materialplatte ausgeschnitten. Das Ausgleichsgewicht 31 bildet eine Art Ausleger 33, wobei der Ausleger 33 -gemäß Figur 6- linksseitig der Längsachse des ersten Armes 17 verläuft, sofern man den Arm 17 beginnend von der ersten Achse 19 zur zweiten Achse 21 hin betrachtet. Aufgrund des so ausgebildeten Auslegers 33 ist eine Art Plattform geschaffen, die -sofern das Gewicht dieser Plattform als Ausgleichsgewicht nicht ausreichend ist- eine Aufnahme bildet, um auf ihr weitere Gewichtsstücke in entsprechend gewünschter Ausbildung aufbringen zu können. Diese Gewichtsstücke können beispielsweise plattenförmige Kreisscheiben sein, die dort mittels geeigneter Befestigungsmittel angeordnet werden können. Durch Hinzunahme beziehungsweise Abnahme von Gewichtskörpern ist das gewünschte Ausgleichsgewicht einstellbar. Ferner kann -nicht dargestellt- vorgesehen sein, daß Verstellmittel zum Verlagern der Position der Ausgleichsgewichte vorgesehen sind, wodurch ein genauer Ausgleich erfolgen kann. Diese Verstellmittel können beispielsweise durch Lochreihen gebildet sein, die ein Versetzen der entsprechenden Ausgleichsgewichte ermöglicht, wobei die Lochreihen von entsprechenden Schraubverbindungen durchgriffen sind. Es ist auch möglich, anstelle der Lochreihen Langlöcher vorzusehen, so daß das Losen eines Spannmittels ein Verschieben der entsprechenden Ausgleichsgewichte ermöglicht und -sobald die gewünschte Position erreicht ist- durch Festspannen der Spannmittel die so gewählte Position der Ausgleichsgewichte fixiert werden kann.

Das zuvor Erwähnte gilt in entsprechend gleicher Weise für das zweite Ausgleichsgewicht 32. Dies bedeutet, daß der Arm 27 beispielsweise mittels Laserschnitt aus plattenförmigem Material erstellt wurde und hierdurch im Bereich seiner Verlängerung 29 eine Art Aufnahmeplattform 35 bildet, auf die - sofern erforderlich- weitere Ausgleichsgewichte aufgebracht werden können. Auch hier sind entsprechende Positionsveränderungsmittel -wie zuvor beim ersten Ausgleichsgewicht beschrieben- vorgesehen.

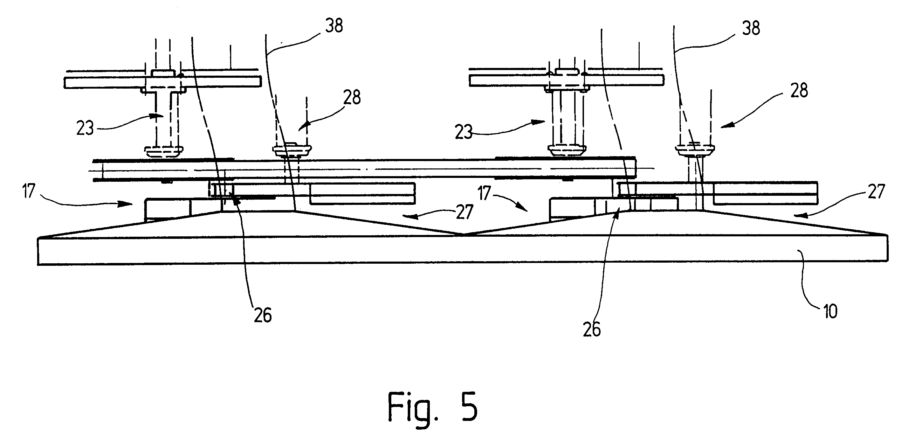

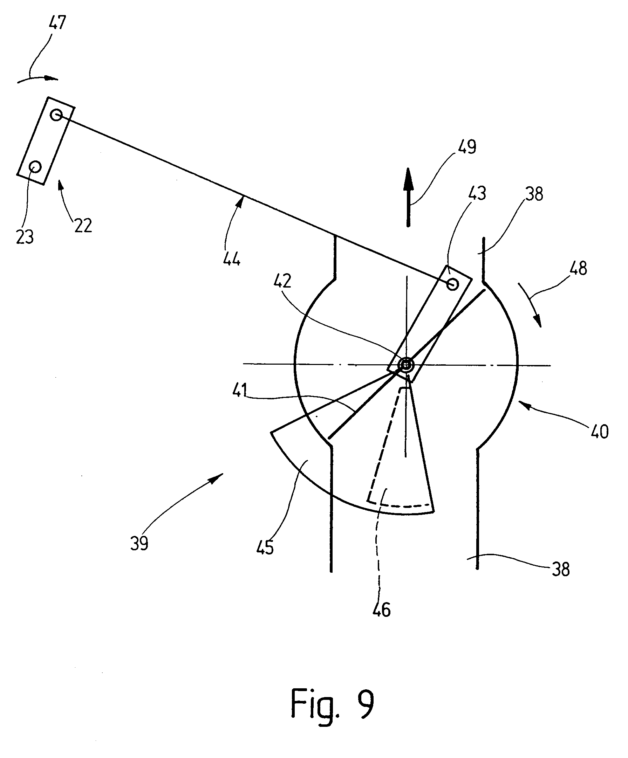

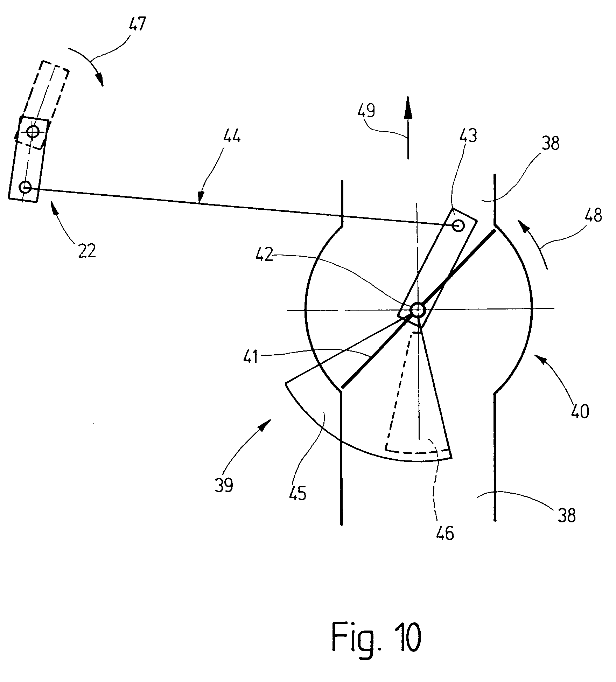

Die Figur 5, die eine Seitenansicht der Figur 4 zeigt (Pfeil 36 in Figur 4), macht deutlich, daß die Aufnahmeeinrichtung 10 an ihrer Seite einen Saugkasten 37 aufweist, der über flexible Vakuumleitungen 38 mit einer nicht dargestellten Vakuumquelle, beispielsweise einem Ventilator, verbunden ist. Im Leitungsweg der Vakuumleitungen 38 befindet sich eine Unterdruck-Steuereinrichtung 39 (Figuren 9 und 10), die dazu dient, das Vakuum in der Aufnahmeeinrichtung 10 zu erzeugen beziehungsweise das Vakuum -beim Absetzen der Güter 1- abzuschalten. Mithin arbeitet die Vakuumquelle kontinuierlich und das Ein- und Ausschalten des Vakuums wird von der Unterdruck-Steuereinrichtung 39 vorgenommen.

Im einzelnen weist die Unterdruck-Steuereinrichtung 39 einen gegenüber der Vakuumleitung 38 erweiterten Querschnitt 40 auf, in dem eine Schwenkklappe 41 mittels ihrer Schwenkachse 42 schwenkbar angeordnet ist. Die Schwenkachse 42 befindet sich im mittleren Bereich der Schwenkklappe 41. Drehfest mit der Schwenkachse 41 ist ein Stellarm 43 verbunden, der über ein nicht näher dargestelltes mechanisches Gestänge 44 zur in der Figur 9 nur schematisch angedeuteten Antriebskurbel 22 führt. Mithin erfolgt mit der Bewegung der Aufnahmeeinrichtung 10 aufgrund des Gelenkgetriebes 16 synchron eine Schwenkbewegung der Schwenkklappe 41. Dies erfolgt nun derart, daß während des Haltebetriebs der Querschnitt der Vakuumleitung 38 durch entsprechende Stellung der Schwenkklappe 41 freigegeben wird, so daß die Güter 1 angesaugt und gehalten werden. Sollen die Güter 1 abgestellt werden, so wird über das Gestänge 44 und den Stellarm 43 die Schwenkklappe 41 in eine Stellung verbracht, in der sie die Vakuumleitung 38 verschließt, wodurch die Unterdruckquelle von der Aufnahmeeinrichtung 10 abgekoppelt wird, das heißt, das Vakuum wird dort abgebaut und die Güter 1 werden freigegeben. Um diesen Freigabevorgang zu beschleunigen, ist drehfest an der Schwenkachse 42 eine Bypass-Luftklappe 45 angeordnet, die Somit synchron zur Schwenkklappe 41 bewegt wird. Die Bypass-Luftklappe 45 wirkt mit einer Belüftungsöffnung 46 zusammen, die nach außen führt. Die Anordnung ist nun so getroffen, daß im Haltebetrieb die Bypass-Luftklappe 45 die Belüftungsöffnung 46 verschließt, so daß das Vakuum in der Aufnahmeeinrichtung 10 aufrechterhalten bleibt. Wird jedoch der Abstellbetrieb eingenommen, so öffnet die Bypass-Luftklappe 45 die Belüftungsöffnung 46, und das Vakuum in der Aufnahmeeinrichtung 10 kann in extrem kurzer Zeit abgebaut und die Güter 1 definiert freigegeben werden.

Die Figuren 9 und 10 zeigen unterschiedliche Positionen der Unterdruck-Steuereinrichtung 39, was am besten durch einen Vergleich der Stellung der Antriebskurbel 22 erkennbar ist. In der Figur 9 liegt die Stellung vor, in der die Schwenkklappe 41 sich gerade geschlossen hat und die Bypass-Luftklappe 45 gerade im Begriff ist, die Belüftungsöffnung 46 freizugeben. Mithin wird damit das Absetzen der Güter 1 eingeleitet. Die Figur 10 zeigt die Stellung von Schwenkklappe 41 und Bypass-Luftklappe 45, in der gerade zum Haltebetrieb übergegangen wird, das heißt, es soll das Ansaugen der Güter 1 eingeleitet werden. Die Drehrichtung der Antriebskurbel 22 ist in den Figuren 9 und 10 mittels des Pfeiles 47 angegeben; die entsprechende Drehrichtung der Schwenkklappe 41 wird mit dem Pfeil 48 gekennzeichnet und die Luftstromrichtung zur Erzeugung des Vakuums ist mit dem Pfeil 49 angedeutet.

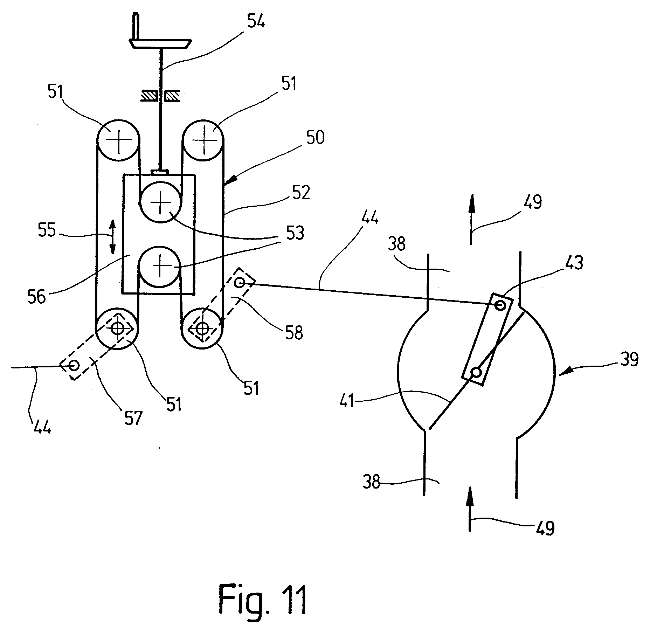

Um nun eine genaue Abstimmung der Bewegung der Aufnahmeeinrichtung 10 mit der Steuerungsfunktion der Unterdruck-Steuereinrichtung 39 herbeizuführen, ist -gemäß Figur 11- im Bereich des mechanischen Gestänges 44 ein Phasenverstellgetriebe 50 angeordnet. Dies weist vier in einer Ebene angeordnete Zahnräder 51 auf, die von einem Zahnriemen 52 umschlungen sind. Der Zahnriemen 52 läuft ferner über zwei Zahnräder 53, die auf einem mittels einer Verstellspindel 54 entlang des Doppelpfeiles 55 verstellbaren Schlitten 56 angeordnet sind. Beginnend beim links unten angeordneten Zahnrad 51 verläuft der Zahnriemen 52 zunächst nach oben, umschlingt dort halb das dort angeordnete Zahnrad 51 und verläuft dann nach unten und umschlingt von unten her halb das erste Zahnrad 53 des Schlittens 56. Von dort verläuft der Zahnriemen 52 wieder nach oben und umschlingt halb dort ein weiteres der erwähnten Zahnräder 51 und verläuft von dort aus nach unten zu einem weiteren Zahnrad 51, das ebenfalls halb umschlungen wird. Von dort verläuft der Zahnriemen 52 nach oben zu dem zweiten der erwähnten beiden Zahnräder 53 und umschlingt dieses halb und verläuft wieder nach unten zu dem Ausgangspunkt, nämlich dem eingangs erwähnten Zahnrad 51. Das unten links angeordnete Zahnrad 51 ist mit einem Hebel 57 drehfest verbunden, das zum Gestänge 44 führt; das unten rechts angeordnete Zahnrad 51 weist ebenfalls einen Hebel 58 auf, der -in Fortsetzung des Gestänges 44- zur Unterdruck-Steuereinrichtung 39 führt. Alternativ kann das Zahnrad 51 auch direkt über zum Beispiel einen zusätzlichen Zahnriemen mit dem Rad 24 verbunden sein.

Wird die Verstellspindel 54 betätigt und hierdurch der Schlitten 56 in Richtung des Pfeiles 55 nach oben beziehungsweise nach unten bewegt und wird weiterhin angenommen, daß die Position des Hebels 57 und damit des zugehörigen Zahnrades 51 unveränderbar aufgrund der Stellung des Gelenkgetriebes 16 vorgegeben ist, so erfolgt eine entsprechende Drehung der Zahnräder 51 und 53 derart, daß der Hebel 58 in eine der Verlagerungsbewegung des Schlittens 56 entsprechende Stellung verdreht wird. Hierdurch ändert sich jedoch auch die Position der Schwenkklappe 41, so daß eine genaue Einregulierung der Steuerzeitpunkte der Schwenkklappe 41 möglich ist.

Im Rahmen der Erfindung liegt es ferner, wenn gemäß dem Oberbegriff des Anspruchs 1 ein Überführen der Güter nicht von der ersten Transporteinrichtung auf die zweite Transporteinrichtung des Ausführungsbeispiels erfolgt, sondern wenn die Güter von der zweiten Transporteinrichtung auf die erste Transporteinrichtung verbracht werden. Dies führt dazu, daß entsprechend parallel angeordnete Reihen von Gütern der zweiten Transporteinrichtung verbracht werden als Endlosreihe auf die erste Transporteinrichtung, wobei es sich bei der Endlosreihe um eine einreihige Anordnung oder -wie beispielsweise aus der Figur 2 ersichtlich- um mehrere parallele Reihen handeln kann. Die einhergehenden Bewegungen des Gelenkgetriebes sind dann nur in entsprechend umgekehrter Weise zu verstehen und auszulegen. Das gleiche gilt selbstverständlich für die Unterdruck-Steuereinrichtung und deren Ansteuerung und so weiter.

Sofern man die Verbindung der Stellung eines Bauteils des Gelenkgetriebes zu der Unterdruck-Steuereinrichtung nicht mechanisch ausführen möchte, sondern auf elegante Weise in elektrischer Ausbildung, so ist es vorteilhaft, wenn die Stellung eines Elements des Gelenkgetriebes mittels eines Winkelaufnehmers erfaßt wird. Dieser Winkelaufnehmer erfaßt die entsprechend vorliegende Stellung des Gelenkgetriebes und ist mit einer Steuerelektronik verbunden, die einen Aktuator entsprechend ansteuert, welcher die Unterdruck-Steuereinrichtung betätigt, beispielsweise die Schwenkklappe 41 auf- beziehungsweise zusteuert. Diese auf elektromagnetischem Wege herbeigeführte Wirkverbindung arbeitet äußerst präzise und im wesentlichen trägheitslos und erlaubt auch eine sehr gute Einregulierung durch entsprechende Offset-Vorgaben auf elektrischem Wege. Auch lassen sich auf diesem Wege sehr einfach nicht nur die Umlenkpunkte und so weiter einstellen, sondern auch die Öffnungs- und Schließzeiten, wobei jede einzelne Einstellung unabhängig von einer anderen ist.

Die vorstehende Winkelaufnehmer-Anordnung erlaubt neben der Stellungserfassung auch eine Geschwindigkeitsbestimmung in jedem Betriebszustand, also zum Beispiel auch beim Anfahren, so daß die Geschwindigkeiten der ersten und der zweiten Transporteinrichtung sowie der Umsetzvorrichtung stets aufeinander abgestimmt sind. Geschwindigkeitsabhängig können somit einzelne Parameter der Gesamtanordnung aufeinander abgestimmt werden; insbesondere auch die Steuerpunkte der Unterdruck-Steuereinrichtung. Auf diese Art und Weise können zum Beispiel Totzeiten in der Unterdruckerzeugung kompensiert werden, das heißt die Schaltfunktion wird geschwindigkeitsunabhängig.

In Figur 3 läuft die erste Transporteinrichtung von rechts nach links zum dann nach hinten erfolgenden Abführen der Güter mittels der zweiten Transporteinrichtung. Sofern die erste Transporteinrichtung (nach einem anderen Ausführungsbeispiel) von links nach rechts fördern würde, ist der Aufbau der Umsetzvorrichtung spiegelbildlich zur Darstellung der Figur 4 vorzunehmen.

## Patentansprüche

1. Umsetzvorrichtung für mit einer ersten Transporteinrichtung (2) angelieferte Güter (1), insbesondere Aluminium-Dosen, die gruppenweise als in Transportrichtung der ersten Transporteinrichtung weisende Reihe von der ersten Transporteinrichtung auf eine zweite Transporteinrichtung (6) überführt werden, wobei das Abstellen der Güter auf die zweite Transporteinrichtung derart erfolgt, daß sich die Reihe quer zu dessen Transportrichtung erstreckt, mit einer die jeweilige Gruppe (5) der Güter bei der Umsetzbewegung haltenden Aufnahmeeinrichtung (10), die mittels mindestens eines Gelenkgetriebes (16) entlang einer Bewegungsbahn geführt wird, wobei das Gelenkgetriebe einen ersten Arm (17) aufweist, der an einem Ende schwenkbar (erste Achse (19)) mit der Aufnahmeeinrichtung (10) und an seinem anderen Ende schwenkbeweglich (zweite Achse (21)) mit einer umlaufenden Antriebskurbel (22) verbunden ist, sowie mit einem zweiten Arm (27), der schwenkbar (dritte Achse (26)) an dem ersten Arm angelenkt und um eine Fixachse (vierte Achse (28)) schwenkbeweglich gelagert ist, **gekennzeichnet durch** ein dem ersten Arm (17) zugeordnetes erstes Ausgleichsgewicht (31).

2. Umsetzvorrichtung nach Anspruch 1, **gekennzeichnet durch** ein dem zweiten Arm (27) zugeordnetes zweites Ausgleichsgewicht (32).

3. Umsetzvorrichtung nach einem der vorhergehenden Ansprüche, **dadurch gekennzeichnet**, daß das erste Ausgleichsgewicht (31) im Bereich der zweiten Achse (21) am ersten Arm (17) angeordnet ist.

4. Umsetzvorrichtung nach einem der vorhergehenden Ansprüche, **dadurch gekennzeichnet**, daß das erste Ausgleichsgewicht (31) in Form eines Auslegers (33) des ersten Arms (17) ausgebildet ist, wobei der Ausleger (33) quer zur Längserstreckung des ersten Arms (17) verläuft.

5. Umsetzvorrichtung nach Anspruch 4, **dadurch gekennzeichnet**, daß der Ausleger (33) einen Seitenausleger des ersten Arms (17) bildet.

6. Umsetzvorrichtung nach einem der Ansprüche 4 oder 5, **dadurch gekennzeichnet**, daß der erste Arm (17) zusammen mit dem Ausleger (33) einen Winkelarm bildet, wobei im Eckbereich des Winkels die zweite Achse (21) angeordnet ist.

7. Umsetzvorrichtung nach einem der vorhergehenden Ansprüche, **dadurch gekennzeichnet**, daß der zweite Arm (27) über seine Fixachse (vierte Achse 28) hinaus verlängert ist und dort ein zweites Ausgleichsgewicht (32) trägt.

8. Umsetzvorrichtung nach einem der vorhergehenden Ansprüche, **dadurch gekennzeichnet**, daß die Masse des ersten und/oder zweiten Ausgleichsgewichts (31, 32) durch Hinzunahme beziehungsweise Abnahme von Gewichtskörpern einstellbar ist.

9. Umsetzvorrichtung nach einem der vorhergehenden Ansprüche, **dadurch gekennzeichnet**, daß die Position des ersten und/oder zweiten Ausgleichsgewichts (31, 32) durch Verstellmittel einstellbar ist.

10. Umsetzvorrichtung nach Anspruch 2, **dadurch gekennzeichnet**, daß das zweite Ausgleichsgewicht (32) zur Längsmittelachse des zweiten Arms (27) fluchtend angeordnet ist.

11. Umsetzvorrichtung nach einem der vorhergehenden Ansprüche, **dadurch gekennzeichnet**, daß die Aufnahmeeinrichtung (10) als Vakuum-Ansaugeinrichtung für die Güter (1), insbesondere Dosen, ausgebildet ist.

12. Umsetzvorrichtung nach Anspruch 11, **gekennzeichnet durch** eine Unterdruck-Steuereinrichtung (39) zum Herbeiführen des Vakuums zum Halten der Güter (1) und zum Abschalten des Vakuums beim Abstellen der Güter (1).

13. Umsetzvorrichtung nach Anspruch 12, **dadurch gekennzeichnet**, daß die Unterdruck-Steuereinrichtung (39) eine in ihrer Vakuumleitung (38) angeordnete Schwenkklappe (41) ist, die im Haltebetrieb den Querschnitt der Vakuumleitung (38) freigibt und im Abstellbetrieb den Querschnitt der Vakuumleitung (38) verschließt.

14. Umsetzvorrichtung nach Anspruch 13, **dadurch gekennzeichnet**, daß die Schwenkklappe (41) in ihrem mittleren Bereich ihre Schwenkachse (42) aufweist.

15. Umsetzvorrichtung nach einem der Ansprüche 13 oder 14, **dadurch gekennzeichnet**, daß die Schwenkklappe (41) in einem erweiterten Querschnittsbereich (40) der Vakuumleitung (38) angeordnet ist.

16. Umsetzvorrichtung nach einem der Ansprüche 13-15, **dadurch gekennzeichnet**, daß die Schwenkklappe (41) über eine Wirkverbindung (insbesondere ein Gestänge 44) von der Antriebskurbel (22) oder einem mit dieser zusammenwirkenden Teil angetrieben ist.

17. Umsetzvorrichtung nach Anspruch 16, **dadurch gekennzeichnet**, daß im Gestänge (44) ein Phasenverstellgetriebe (50) angeordnet ist.

18. Umsetzvorrichtung nach einem der vorhergehenden Ansprüche 12-17, **dadurch gekennzeichnet**, daß an einem Teil des Gelenkgetriebes (16) ein Winkelaufnehmer angeordnet ist, der mit einer Steuerelektronik zusammenwirkt, die einen Aktuator ansteuert, der die Unterdruck-Steuereinrichtung (39) betätigt.

19. Umsetzvorrichtung nach einem der vorhergehenden Ansprüche 13-18, **dadurch gekennzeichnet**, daß stromaufwärts der Schwenkklappe (41) eine synchron mit dieser bewegte Bypass-Luftklappe (45) angeordnet ist, die im Haltebetrieb eine Belüftungsöffnung (46) verschließt und im Abstellbetrieb die Belüftungsöffnung (46) öffnet.

20. Umsetzvorrichtung nach Anspruch 19, **dadurch gekennzeichnet**, daß Schwenkklappe (41) und Bypass-Luftklappe (45) auf derselben Schwenkachse (42) angeordnet sind.

## Claims

1. A transfer device for articles (1), in particular aluminium cans, supplied by a first conveying device (2), which are transferred in groups as a series facing in the conveying direction of the first conveying device from the said first conveying device to a second conveying device (6), the articles being deposited on the second conveying device in such a way that the series extends transversely to the conveying direction of the second conveying device, with a receiving device (10) which holds the respective group (5) of articles during the transfer movement and which is guided along a movement path by means of at least one articulated linkage (16), the articulated linkage having a first arm (17) which is connected at one end in a pivotable manner (first axis (19)) to the receiving device (10) and at its other end in a pivotable and translatable manner (second axis (21)) to a rotating drive crank (22), and with a second arm (27) which is articulated in a pivotable manner (third axis 26) to the first arm and is mounted so as to be pivotable and translatable about a fixed axis (fourth axis (28)), **characterized by** a first balancing weight (31) associated with the first arm (17).

2. A transfer device according to Claim 1, **characterized by** a second balancing weight (32) associated with the second arm (27).

3. A transfer device according to one of the preceding Claims, **characterized in that** the first balancing weight (31) is arranged on the first arm (17) in the region of the second axis (21).

4. A transfer device according to one of the preceding Claims, **characterized in that** the first balancing weight (31) is constructed in the form of an extension arm (33) of the first arm (17), the extension arm (33) extending transversely to the longitudinal extent of the first arm (17).

5. A transfer device according to Claim 4, **characterized in that** the extension arm (33) forms a lateral extension arm of the first arm (17).

6. A transfer device according to one of Claims 4 or 5, **characterized in that** the first arm (17) together with the extension arm (33) forms an angle arm, the second axis (21) being situated in the corner region of the angle.

7. A transfer device according to one of the preceding Claims, **characterized in that** the second arm (27) is lengthened beyond its fixed axis (fourth axis 28) and supports a second balancing weight (32) there.

8. A transfer device according to one of the preceding Claims, **characterized in that** the mass of the first and/or second balancing weight (31, 32) is adjustable by adding or removing weights.

9. A transfer device according to one of the preceding Claims, **characterized in that** the position of the first and/or second balancing weight (31, 32) is adjustable by displacement means.

10. A transfer device according to Claim 2, **characterized in that** the second balancing weight (32) is arranged in alignment with the longitudinal median axis of the second arm (27).

11. A transfer device according to one of the preceding Claims, **characterized in that** the receiving device (10) is constructed as a vacuum-suction device for the articles (1), in particular cans.

12. A transfer device according to Claim 11, **characterized by** an underpressure-control device (39) for producing the vacuum for holding the articles (1) and for switching off the vacuum as the articles (1) are deposited.

13. A transfer device according to Claim 12, **characterized in that** the underpressure-control device (39) is a pivoting flap (41) which is arranged in its vacuum line (38) and which frees the cross-section of the vacuum line (38) in the holding operation and closes the cross-section of the vacuum line (38) in the depositing operation.

14. A transfer device according to Claim 13, **characterized in that** the pivoting flap (41) has its pivot axis (42) in its central region.

15. A transfer device according to one of Claims 13 or 14, **characterized in that** the pivoting flap (41) is arranged in an enlarged cross-sectional area (40) of the vacuum line (38).

16. A transfer device according to one of Claims 13 to 15, **characterized in that** the pivoting flap (41) is driven - by way of an operative connexion (in particular a linkage 44) - by the drive crank (22) or a part cooperating therewith.

17. A transfer device according to Claim 16, **characterized in that** a phase-adjustment gearing (50) is arranged in the linkage (44).

18. A transfer device according to one of the preceding Claims 12 to 17, **characterized in that** an angled pick-up, which cooperates with an electronic control means which controls an actuator actuating the underpressure-control device (39), is arranged on part of the articulated linkage (16).

19. A transfer device according to one of the preceding Claims 13 to 18, **characterized in that** a by-pass air flap (45), which is moved in synchronism with the pivoting flap (41) and which closes an aerating opening (46) in the holding operation and opens the aerating opening (46) in the depositing operation, is arranged upstream of the pivoting flap (41).

20. A transfer device according to Claim 19, **characterized in that** the pivoting flap (41) and the by-pass air flap (45) are arranged on the same pivot axis (42).

## Revendications

1. Dispositif de transfert pour des marchandises (1) acheminées par un premier dispositif de transport (2), notamment des boîtes en aluminium, qui sont transférées du premier dispositif de transport au second dispositif de transport (6) de façon groupée, sous la forme d'une rangée pointant dans la direction d'avancement du premier dispositif de transport, sachant que les marchandises sont déposées sur le second dispositif de transport de telle manière que la rangée s'étende transversalement à sa direction de transport, comprenant un dispositif de réception (10) maintenant le groupe (15) de marchandises lors du mouvement de transfert, qui est guidé le long d'une trajectoire au moyen d'au moins un mécanisme articulé (16), sachant que le mécanisme articulé présente un premier bras (17) qui est relié de façon pivotante par une extrémité (premier axe (19)) au dispositif de réception (10) et par son autre extrémité (deuxième axe (21)) à une manivelle circulaire (22), et un second bras (27) qui est relié de façon articulée et pivotante (troisième axe (26)) au premier bras et est monté de façon pivotante autour d'un axe fixe (quatrième axe (28)), caractérisé par un premier contrepoids d'équilibre (31) associé au premier bras (17).

2. Dispositif de transfert selon la revendication 1, caractérisé par un deuxième contrepoids d'équilibre (32) associé au second bras (27).

3. Dispositif de transfert selon l'une des revendications précédentes, caractérisé en ce que le premier contrepoids d'équilibre (31) est placé sur le premier bras (17) dans la zone du deuxième axe (21).

4. Dispositif de transfert selon l'une des revendications précédentes, caractérisé en ce que le premier contrepoids d'équilibre (31) est réalisé sous la forme d'un porte-à-faux (33) du premier bras (17), le porte-à-faux (33) s'étendant transversalement à l'étendue longitudinale du premier bras (17).

5. Dispositif de transfert selon la revendication 4, caractérisé en ce que le porte-à-faux (33) constitue un porte-à-faux latéral du premier bras (17).

6. Dispositif de transfert selon la revendication 4 ou 5, caractérisé en ce que le premier bras (17) forme avec le porte-à-faux (33) un bras coudé, le deuxième axe (21) étant disposé dans l'angle du coude.

7. Dispositif de transfert selon l'une des revendications précédentes, caractérisé en ce que le second bras (27) se prolonge au-delà de son axe fixe (quatrième axe 28) et porte à cet endroit un deuxième contrepoids d'équilibre (32).

8. Dispositif de transfert selon l'une des revendications précédentes, caractérisé en ce que la masse du premier et/ou deuxième contrepoids d'équilibre (31, 32) peut être réglée en ajoutant ou en retirant des poids.

9. Dispositif de transfert selon l'une des revendications précédentes, caractérisé en ce que la position du premier et/ou deuxième contrepoids d'équilibre (31, 32) peut être réglée par des moyens d'ajustement.

10. Dispositif de transfert selon la revendication 2, caractérisé en ce que le deuxième contrepoids d'équilibre (32) est disposé dans l'alignement de l'axe médian longitudinal du deuxième bras (27).

11. Dispositif de transfert selon l'une des revendications précédentes, caractérisé en ce que le dispositif de réception (10) est réalisé en tant que dispositif d'aspiration par le vide pour les marchandises (1), notamment des boîtes.

12. Dispositif de transfert selon la revendication 11, caractérisé par un dispositif de commande de dépression (39) pour créer le vide destiné à maintenir les marchandises (1) et pour supprimer le vide lors de la pose des marchandises (1).

13. Dispositif de transfert selon la revendication 12, caractérisé en ce que le dispositif de commande de dépression (39) est un volet pivotant (41) placé dans sa conduite de vide (38), qui, pendant la phase de maintien, libère la section de la conduite de vide (38) et, pendant la phase de pose, obstrue la section de la conduite de vide (38).

14. Dispositif de transfert selon la revendication 13, caractérisé en ce que l'axe de pivotement (42) du volet pivotant (41) se situe dans sa partie centrale.

15. Dispositif de transfert selon la revendication 13 ou 14, caractérisé en ce que le volet pivotant (41) est placé dans une partie de la conduite de vide (38) dont la section est élargie (40).

16. Dispositif de transfert selon l'une des revendications 13 à 15, caractérisé en ce que le volet pivotant (41) est entraîné par la manivelle (22) ou par une pièce coopérant avec celle-ci par le biais d'une liaison active (notamment une tringlerie 44).

17. Dispositif de transfert selon la revendication 16, caractérisé en ce qu'un mécanisme de réglage de phases (50) est placé dans la tringlerie (44).

18. Dispositif de transfert selon l'une des revendications 12 à 17, caractérisé en ce qu'un enregistreur d'angle est placé en un point du mécanisme articulé (16), qui coopère avec un système de commande électronique commandant un organe d'exécution, lequel actionne le dispositif de commande de dépression (39).

19. Dispositif de transfert selon l'une des revendications 13 à 18, caractérisé en ce qu'en amont du volet pivotant (41) est disposé un volet de dérivation (45) actionné de façon synchrone avec ce dernier, qui, pendant la phase de maintien, ferme une ouverture de ventilation (46) et, pendant la phase de pose, ouvre l'ouverture de ventilation (46).

20. Dispositif de transfert selon la revendication 19, caractérisé en ce que le volet pivotant (41) et le volet de dérivation (45) sont placés sur le même axe de pivotement (42).
